# EUROPÄISCHE PATENTSCHRIFT

(11) **EP 2 331 805 B1**
(45) Veröffentlichungstag und Bekanntmachung des Hinweises auf die Patenterteilung: **16.07.2014**
(21) Anmeldenummer: 09780968.5
(22) Anmeldetag: 23.07.2009
(51) Int. Cl.: F02M 37/22, B01D 27/08, B01D 35/18

(54) **FILTEREINRICHTUNG FÜR VERBRENNUNGSMOTOREN**
FILTER DEVICE FOR INTERNAL COMBUSTION ENGINES
DISPOSITIF DE FILTRATION POUR MOTEURS À COMBUSTION INTERNE

(30) Priorität: 17.09.2008 DE 102008047468
(43) Veröffentlichungstag der Anmeldung: 15.06.2011
(73) Patentinhaber: Mahle International GmbH, 70376 Stuttgart (DE)
(72) Erfinder: LIKA, Torsten, 70197 Stuttgart (DE)
(74) Vertreter: BRP Renaud & Partner
(86) Internationale Anmeldenummer: PCT/EP2009/059479
(87) Internationale Veröffentlichungsnummer: WO 2010/031622

(56) Entgegenhaltungen:
- EP-A1- 1 036 930
- EP-A1- 1 484 098
- EP-A1- 1 656 979
- WO-A1-2005/049173
- DE-A1-102006 060 128
- DE-A1-102006 060 129
- US-A- 3 325 015

## Beschreibung

Die vorliegende Erfindung betrifft eine Filtereinrichtung, insbesondere einen Öl- oder Kraftstofffilter für einen Verbrennungsmotor eines Fahrzeugs gemäß dem Oberbegriff des Anspruchs 1. Die Erfindung betrifft außerdem ein mit einer solchen Filtereinrichtung ausgestattetes Kraftfahrzeug.

Aus der DE 10 2006 060 128 A1 ist eine gattungsgemäße Filtereinrichtung mit einem Filtergehäuse bekannt, das ein topfförmiges Gehäuseteil und einen mit diesem Gehäuseteil dicht verbundenen Deckel umfasst. Eine Öffnung im Deckel des Filtergehäuses dient zur Aufnahme eines Anbauteils. Der Deckel ist bereichsweise doppelwandig ausgebildet und ein Montagebereich des Anbauteils ist mit zumindest einer Durchgangsbohrung ausgestattet. Das Anbauteil, respektive eine Stabeinrichtung, ist mittels einer durch die Durchgangsbohrung des Montagebereichs durchführenden Schraube in jeweils einer deckelseitigen Einschrauböffnung mit Sacklochgewinde verschraubt. Zudem lässt sich das in das Filtergehäuse eingesetzte Anbauteil nach Lösung der Verschraubung von der restlichen Filtereinrichtung trennen.

Nachteilig an dem gattungsgemäßen Stand der Technik ist die Fixierung des Anbauteils, respektive der Stabeinrichtung, mittels direkter Verschraubung in Einschrauböffnungen mit Sacklochgewinde des Deckels. Durch diese Einschrauböffnungen leidet die Stabilität der Deckelscheibe. Infolge des Stabilitätsverlustes muss die Deckelscheibe massiver oder doppelwandig ausgebildet werden. Zudem müssen die Einschrauböffnungen mit eingeschraubter Schraube zusätzlich abgedichtet werden, da im Innenraum der Filtereinrichtung ein erhöhter Druck herrscht. Des Weiteren lässt sich aufgrund der massiven Bauweise der Deckelscheibe das Verbördeln von dem Gehäuseteil des Filtergehäuses mit dem Deckel schlechter realisieren.

Die vorliegende Erfindung beschäftigt sich mit dem Problem, eine verbesserte oder zumindest eine andere Ausführungsform für eine gattungsgemäße Filtereinrichtung anzugeben, die sich durch eine höhere Stabilität des Deckels bei weniger massiver Bauweise des Deckels auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht nun auf dem allgemeinen Gedanken, die Befestigung des Anbauteils nicht direkt am Deckel durch Verschraubung im/am Deckel zu realisieren, sondern durch ein zusätzliches Halteelement, das Haltekonturen mit Durchgangsöffnungen enthält, und das mit dem Gehäuseteil des Filtergehäuses dichtend verbördelt wird, sodass die Befestigung des Anbauteils auf eine andere Art umgesetzt ist und somit die Befestigungsöffnungen im Deckel obsolet werden. Dadurch lässt sich der Deckel weniger massiv gestalten. Durch das Verbördeln von Halteelement und Gehäuseteil erhält der Deckel zusätzliche Stabilität und wird zudem noch gehäuseseitig fixiert.

Da zur Herstellung das Halteelement mit den Durchgangsöffnungen als Blechformteil aus Blech ausgestanzt wird und die Haltekonturen in einem weiteren Schritt umgebogen werden, lässt sich das Halteelement besonders einfach und kostengünstig herstellen und durch die vereinfachte Herstellung ist man in der Formengebung sehr flexibel. In einem weiteren Schritt wird dann das Blechformteil mit dem Filter verbördelt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine Seitenaufsicht auf eine Filtereinrichtung,
- Fig. 2: eine anschlussseitige Aufsicht auf die Filtereinrichtung,
- Fig. 3: eine Aufsicht auf die Anschlussseite mit zwei angedeuteten Schnittebenen A und B,
- Fig. 4: Längsschnitt durch die Filtereinrichtung gemäß der Schnittebene A wie in Fig. 3 angedeutet,
- Fig. 5: Längsschnitt durch die Filtereinrichtung gemäß der Schnittebene B wie in Fig. 3 angedeutet.

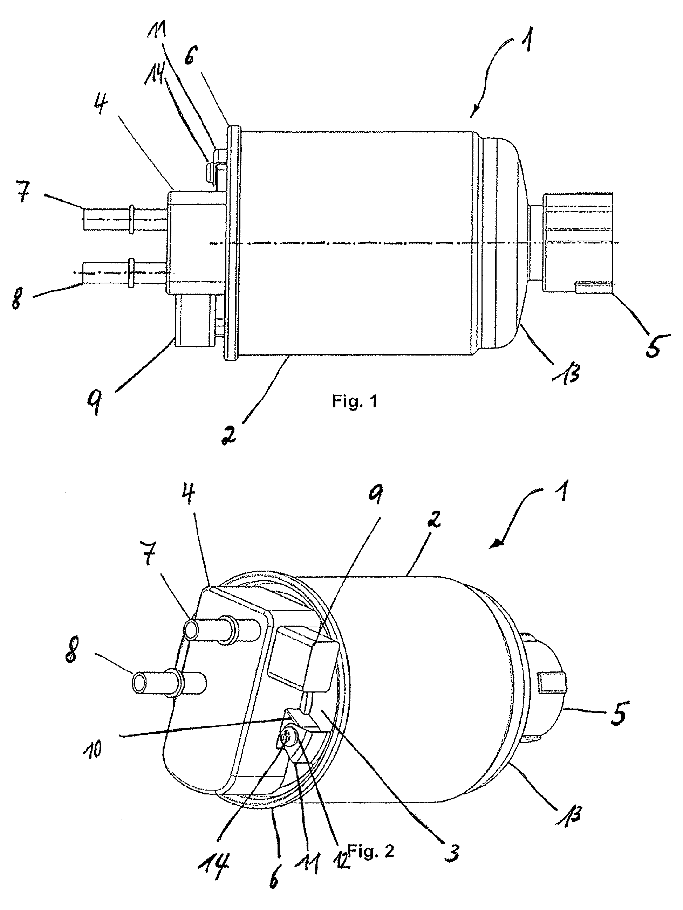

Entsprechend den Fig. 1 und Fig. 2, umfasst eine vorteilhafte Ausführungsform einer Filtereinrichtung 1, ein Filtergehäuse, das ein Gehäuseteil 2 und einen Deckel 3 aufweist, ein z.B. als Heizeinrichtung 4 ausgebildetes Anbauteil, eine Wasserablasseinrichtung 5 und ein Halteelement 6 zum Fixieren der Heizeinrichtung 4 sowie des Deckels 3. Die Heizeinrichtung 4 ist mit einer Ab-/Zuführleitung 7, einer Zu-/Abführleitung 8, einem Stromversorgungsstecker 9 und einer Montagekonsole 10 ausgestattet. Aus dem Halteelement 6 ist eine Haltekontur 11 einstückig mit dem Halteelement 6 ausgeformt und mit einer Durchgangsöffnung 12 versehen. Diese Art Deckelbaugruppen werden üblicherweise mit ein oder mehr Schweißpunkten vorfixiert und anschließend im Lötofen dicht und fest verlötet. Nach dem Einsetzen des Filterelementes wird der nunmehr zusammengelötete Deckel 3 samt Halteelement 6 mit dem Gehäuseteil 2 verbördelt.

Das Gehäuseteil 2 des Filtergehäuses ist mit einer Verjüngung 13 in Richtung der Wasserablasseinrichtung 5 ausgestattet.

Da die Filtereinrichtung 1 im Gebrauchsfall senkrecht eingebaut wird, sammelt sich das in der Filtereinrichtung 1 abgeschiedene Wasser im unteren Bereich der Filtereinrichtung 1 und wird durch die Verjüngung 13 zur Wasserablasseinrichtung 5 geleitet.

Das Halteelement 6 hintergreift mittels seiner Haltekontur 11 die Montagekonsole 10 der Heizeinrichtung 4. Dabei kommt eine Durchgangsöffnung 12 der Haltekonsole 11 mit einer in Fig. 1 und 2 nicht dargestellten Einschrauböffnung der Montagekonsole 10 des Heizelements 4 zur Deckung, so dass eine Schraube 14 durch die Durchgangsöffnung 12 in der Einschrauböffnung der Montagekonsole 10 verschraubt werden kann und die Heizeinrichtung 4 somit durch das Halteelement 6 auf dem Filterdeckel 3 fixiert ist. Vorteilhaft an dieser bevorzugten Ausführungsform ist die einstückige Ausformung von Haltekontur 11 und Halteelement 6.

Das Halteelement 6 wird als Blechformteil mit zumindest einer Durchgangsöffnung 12 ausgestanzt, es bleibt ein kreisförmiger Rand mit nach innen stehenden Laschen/Ohren übrig. Der Rand ist zum späteren Verlöten mit dem Deckel 3 und zum Verbördeln mit dem Gehäuseteil 2 erforderlich. Die Ohren werden vor dem Löten aufgestellt und die zumindest eine Haltekontur 11 wird umgebogen bevor, nach dem Zusammenbau des Filters, das Heizelement 4 eingesetzt wird. Ein so hergestelltes Halteelement 6 ist extrem einfach herzustellen und bedarf nur weniger Arbeitsgänge. Dies reduziert die Herstellungskosten, den Montageaufwand und die Anzahl der herzustellenden Einzelteile im Vergleich zu einer Ausführungsform, bei der die Haltekonturen angeschweißt oder in andere Weise nachträglich befestigt werden.

Im Vergleich zu einer Ausführungsform, bei der das Heizelement 4 mittels der Montagekonsolen 10 direkt im Deckel 3 durch Verschraubung oder Vernietung fixiert wird, ist die in den Figuren dargestellte Ausführungsform durch eine erhöhte Stabilität des Deckels 3 verbessert. Da in dieser bevorzugten Ausführungsform Bohrungen im Deckel 3 zur Befestigung der Heizeinrichtung 4 nicht mehr notwendig sind, kann der Deckel 3 somit auch weniger massiv ausgebildet sein. Dies bringt weitere Einsparungsmöglichkeiten am Gewicht und an den Herstellungskosten mit sich.

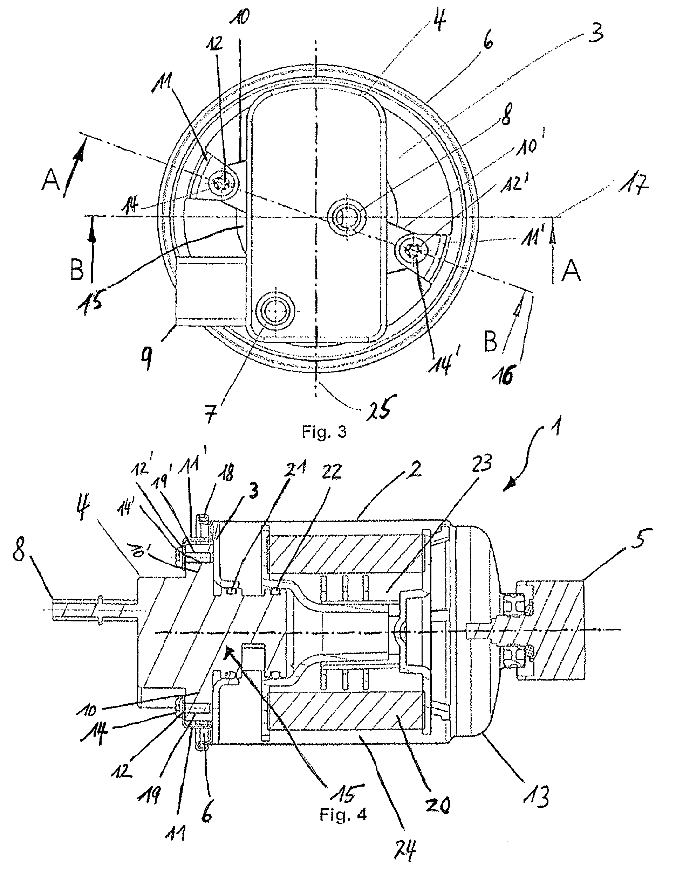

Gemäß der Fig. 3 sind bei einer bevorzugten Ausführungsform die zwei Montagekonsolen 10, 10' der Heizeinrichtung 4 von jeweils einer Haltekontur 11, 11' des Halteelements 6 so hintergriffen, dass jeweils eine Schraube 14, 14' durch jeweils eine Durchgangsöffnung 12, 12' der Haltekonturen 11, 11' in jeweils eine der hier nicht gezeigten Einschrauböffnungen der Montagekonsolen 10, 10' eingeschraubt ist, und somit die Heizeinrichtung 4 durch das Halteelement 6 auf dem Deckel 3 fixiert ist. Im fixierten Zustand durchdringt zudem die Heizeinrichtung 4 den Deckel 3 in einer Öffnung 16.

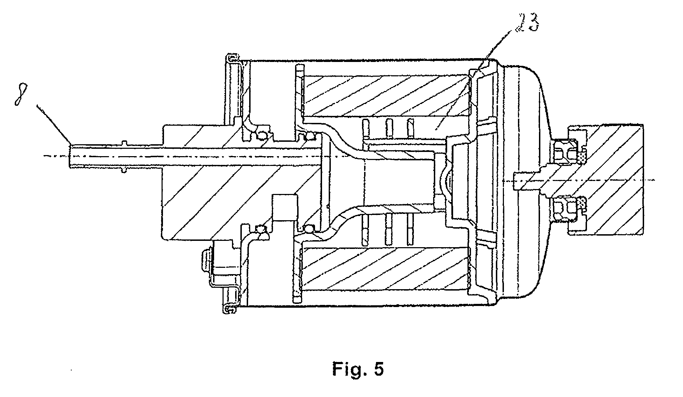

Des Weiteren sind in Fig. 3 die Schnittlinie A-A (16) und die Schnittlinie B-B (17) eingezeichnet, aus denen die Ansichten der Längsschnitte durch die Filtereinrichtung gemäß den Fig. 4 und 5 hervorgehen.

Fig. 4 zeigt einen Längsschnitt gemäß der Schnittlinie A-A aus Fig. 3 durch die Filtereinrichtung 1. In diesem Längsschnitt ist ein Schnitt durch die Verbördelung 18 des Halteelements 6 mit dem Gehäuseteil 2 des Filtergehäuses dargestellt. Des Weiteren ist ein Längsschnitt durch die Verschraubung der Haltekonturen 11, 11' mit den Montagekonsolen 10, 10' durch die Durchgangsöffnung 12, 12' in die Einschrauböffnungen 19, 19' mittels der Schrauben 14, 14' gezeigt.

In einer bevorzugten Ausführungsform sind die Montagekonsolen 10, 10' aus Kunststoff ausgeformt und bilden einen integralen Bestandteil der Heizeinrichtung 4 oder sind im Spritzgussverfahren an dieselbe angespritzt. Das Heizelement 4 durchdringt den Deckel 3 an der Stelle der Durchgangsöffnung 15 des Deckels 3. Ebenso lassen sich weitere übliche Komponenten einer Filtereinrichtung 1 der Fig. 4 entnehmen, wie z.B. ein Filtereinsatz 20, Ringdichtungen 21, 22 und Rein-/Rohräume 23, 24. Aufgrund der Lage des Deckels 3 zum Halteelement 6 und zum Heizelement 4 in Einbaulage ist ersichtlich, dass sowohl das Halteelement 6 als auch das Heizelement 4 im befestigten Zustand den Deckels 3 fixieren.

Aus den Fig. 3 und 4 ist zu entnehmen, dass bezüglich der zentralen Längsachse der Filtereinrichtung 1 die Zuführ- und Abführleitungen 7, 8 exzentrisch ausgebildet sind und die Montagekonsolen 10, 10' außerhalb der Schnittlinie B 17 und der Mittelachse 25 liegen. Fig. 5 verdeutlicht, dass die Zu-/Abführleitung 8 direkt in einen Rein-/Rohraum 23 führt.

## Patentansprüche

1. Filtereinrichtung, insbesondere für Öl- oder Kraftstoff eines Verbrennungsmotors mit Filtergehäuse und Anbauteil (4), wobei dasFiltergehäuse ein Gehäuseteil (2) sowie einen damit dicht verbundenen Deckel (3) aufweist, der mit einer Durchgangsöffnung (15) für das mit dem Gehäuse verbindbare Anbauteil (4) versehen ist,
**dadurch gekennzeichnet,**
**dass** der Deckel (3) am Gehäuseteil (2) mittels eines mit dem Gehäuseteil (2) verbördelten Halteelementes (6) fixiert ist, welches als gestanztes Blechformteil in Form eines kreisförmigen Randes des Deckels (3) mit nach innen stehenden Laschen bzw. Ohren ausgebildet ist, die als Haltekontur (11) von Montagekonsolen (10) einer als Anbauteil vorgesehenen Heizeinrichtung (4) vorgesehen sind und die Montagekonsolen (10) hintergreifen.

2. Filtereinrichtung nach Anspruch 1,
**dadurch gekennzeichnet,**
**dass** das Halteelement (6) zumindest eine, insbesondere als Haltenase ausgeformte, Haltekontur (11, 11'), aufweist, welche das Anbauteil in dessen Einbaulage hintergreift.

3. Filtereinrichtung nach Anspruch 2,
**dadurch gekennzeichnet,**
**dass** im Bereich der wenigstens einen Haltekontur (11, 11') zumindest eine Durchgangsöffnung (12, 12') vorgesehen ist, durch die hindurch mittels eines Befestigungselements (14, 14'), die Heizeinrichtung (4) am Filtergehäuse (2) fixierbar ist.

4. Filtereinrichtung nach einem der Ansprüche 1 bis 3,
**dadurch gekennzeichnet,**
**dass** die zumindest eine Montagekonsole (10, 10') als Integraler Bestandteil der Heizeinrichtung (4) ausgebildet und/oder im Spritzgussverfahren als Kunststoffteil angespritzt ist.

5. Filtereinrichtung nach einem der Ansprüche 1 bis 4,
**dadurch gekennzeichnet,**
**dass** die zumindest eine Montagekonsole (10, 10') eine Einschrauböffnung (19, 19') für ein Befestigungselement aufweist.

6. Filtereinrichtung nach einem der Ansprüche 1 bis 5,
**gekennzeichnet durch** eine im Gebrauchsfall senkrechte Einbaulage, bei der abgeschiedenes Wasser in einem deckelfemen unteren Bereich der Filtereinrichtung **durch** eine Verjüngung (13) des Filtergehäuses (2) zu einer Wasserableiteinrichtung (5) geleitet wird.

7. Filtereinrichtung mit einer als Anbauteil ausgebildeten Heizeinrichtung (4) nach einem der Ansprüche 1 bis 6,
**dadurch gekennzeichnet,**
**dass** eine als Anbauteil vorgesehene Heizeinrichtung (4) zumindest eine Zu- und zumindest eine Abführleitung (7, 8) der Filtereinrichtung umfasst.

## Claims

1. A filter device, in particular for oil or fuel of an internal combustion engine with filter housing and attachment part (4), wherein the filter housing has a housing part (2) and a cover (3) tightly connected therewith, which cover is provided with a through-opening (15) for the attachment part (4) which is able to be connected with the housing,
**characterized in**
**that** the cover (3) is fixed to the housing part (2) by means of a holding element (6) which is crimped to the housing part (2) and which is constructed as a punched shaped part of sheet metal in the form of a circular rim of the cover (3) with inwardly projecting tabs or respectively lugs, which are provided as a holding contour (11) of mounting brackets (10) of a heating device (4), provided as attachment part, and engage behind the mounting brackets (10).

2. The filter device according to claim 1,
**characterized in**
**that** the holding element (6) has at least one holding contour (11, 11'), in particular formed as a holding nose, which engages behind the attachment part in its installed position.

3. The filter device according to claim 2,
**characterized in**
**that** in the region of the at least one holding contour (11, 11') at least one through-opening (12, 12') is provided, through which the heating device (4) can be fixed on the filter housing (2) by means of a fastening element (14, 14').

4. The filter device according to one of claims 1 to 3,
**characterized in**
**that** the at least one mounting bracket (10, 10') is constructed as an integral component of the heating device (4) and/or is injected on as a plastic part by an injection moulding method.

5. The filter device according to one of claims 1 to 4,
**characterized in**
**that** the at least one mounting bracket (10, 10') has a screw-in opening (19, 19') for a fastening element.

6. The filter device according to one of claims 1 to 5,
**characterized by** a vertical installation position in the case of use, in which separated water in a lower region of the filter device remote from the cover is directed through a taper (13) of the filter housing (2) to a water discharge device (5).

7. The filter device with a heating device (4) constructed as an attachment part according to one of claims 1 to 6,
**characterized in**
**that** a heating device (4) provided as attachment part comprises at least one supply line and at least one removal line (7, 8) of the filter device.

## Revendications

1. Dispositif de filtrage, notamment pour l'huile ou le carburant d'un moteur à combustion interne comportant un logement de filtre et une pièce rapportée (4), dans lequel le logement de filtre présente une pièce de logement (2) ainsi qu'une couvercle (3) relié de manière étanche à celle-ci, qui est pourvu d'un ouverture traversante (15) pour la pièce rapportée (4) pouvant être reliée au logement,
**caractérisé en ce**
**que** le couvercle (3) est fixé sur la pièce de logement (2) au moyen d'un élément de retenue (6) serti avec la pièce de logement (2), qui est conçu comme une pièce façonnée en tôle découpée à l'emporte-pièces, en forme d'un bord circulaire du couvercle (3) avec des languettes, respectivement oreilles dépassant vers l'intérieur, qui sont prévus comme contour de retenue (11) de consoles de montage (10) d'un dispositif de chauffage (4) prévu comme une pièce rapportée et qui viennent en prise par derrière avec les consoles de montage (10).

2. Dispositif de filtrage selon la revendication 1,
**caractérisé en ce**
**que** l'élément de retenue (6) présente au moins un contour de retenue (11, 11') façonné notamment comme un nez de retenue, qui vient en prise par derrière avec la pièce rapportée dans la position de montage de cette dernière.

3. Dispositif de filtrage selon la revendication 2,
**caractérisé en ce**
**que** au niveau d'au moins un contour de retenue (11, 11') au moins une ouverture traversante (12, 12') est prévue, à travers laquelle au moyen d'un élément de fixation (14, 14') le dispositif de chauffage (4) peut être fixé sur le logement de filtre (2).

4. Dispositif de filtrage selon une des revendications 1 à 3,
**caractérisé en ce**
**que** au moins une console de montage (10, 10') est conçue comme une partie intégrante du dispositif de chauffage (4) et/ou est moulée par injection comme une pièce en plastique lors du procédé de moulage par injection.

5. Dispositif de filtrage selon une des revendications 1 à 4,
**caractérisé en ce**
**que** au moins une console de montage (10, 10') présente une ouverture de vissage (19, 19') destinée à un élément de fixation.

6. Dispositif de filtrage selon une des revendications 1 à 5,
**caractérisé en ce**
**que** une position de montage perpendiculaire en cas d'utilisation, dans laquelle l'eau séparée dans une zone inférieure éloignée du couvercle du dispositif de filtrage est guidée par un rétrécissement (13) du logement de filtre (2) vers un dispositif d'évacuation d'eau (5).

7. Dispositif de filtrage comportant un dispositif de chauffage (4) conçu comme une pièce rapportée selon une des revendications 1 à 6,
**caractérisé en ce**
**que** un dispositif de chauffage (4) prévu comme une pièce rapportée comprend au moins une conduite d'amenée et au moins une conduite d'évacuation (7, 8) du dispositif de filtrage.
